# EUROPÄISCHE PATENTSCHRIFT

(11) **EP 2 474 747 B1**
(45) Veröffentlichungstag und Bekanntmachung des Hinweises auf die Patenterteilung: **23.04.2014**
(21) Anmeldenummer: 11150396.7
(22) Anmeldetag: 07.01.2011
(51) Int. Cl.: F16B 2/08, F16B 43/02, B29C 70/20, B29C 70/88, F03D 11/00, F16L 3/12, F16L 33/04, F16L 21/06

(54) **Zusammenstellung eines Faserverbundelements und eines Unterlegelements**
Combination of a fibre compound element and a washer element
Combinaison d'un élément composite en fibres et un élément de rondelle

(43) Veröffentlichungstag der Anmeldung: 11.07.2012
(73) Patentinhaber: F&G Engineering GmbH, 71069 Sindelfingen (DE)
(72) Erfinder: Fassbaender, Peter, 71065 Sindelfingen (DE); Georgii, Andreas, 71069 Sindelfingen (DE)
(74) Vertreter: DREISS Patentanwälte PartG mbB

(56) Entgegenhaltungen:
- EP-A1- 1 308 265
- WO-A2-03/093683
- DE-A1- 3 028 609
- DE-A1-102007 017 446
- DE-C1- 3 420 696
- GB-A- 104 484
- GB-A- 2 138 529
- GB-A- 2 451 192
- US-A- 3 291 426
- US-A- 5 405 227

## Beschreibung

Die vorliegende Erfindung bezieht sich auf eine Zusammenstellung eines flexiblen oder starren Faserverbundelements und eines Unterlegelements zum umlenkend zugbelasteten Verbinden eines Faserverbundelementes mit einem Bauelement.

Faserverbundelemente werden mit beispielsweise metallischen Bauelementen in einer Weise verbunden, wie dies bei anderen Verbundelementen oder sonstigen Einmaterialelementen der Fall ist, indem übliche Schraub- oder Nietverbindungen oder dergleichen verwendet werden. Diese Art der üblicherweise verwendeten Verbindung eines Faserverbundelementes mit einem anderen Bauelement hat den Nachteil, dass die Fasern im Bereich einer Durchgangsbohrung insbesondere dann beschädigt werden können, wenn Fasern auf Grund der Art der Befestigung eines flexiblen Faserverbundelementes oder auf Grund der Form eines starren Faserverbundelementes umgelenkt werden oder sind. Da die Fasern bei solchen Faserverbundelementen praktisch ausschließlich auf Zug belastet sind, kann ein Quetschen der Fasern im Umlenkbereich durch eine Schraub- oder Nietverbindung schädlich sein.

Aus der US 3,291,426, der GB 104 484, der US 5,405,227, der DE 34 20 696 C1 und der GB 2 138 529 A sind Schraubenköpfe, Muttern oder Unterlegelemente mit kalottenförmigen Kontaktflächen bekannt. Diese Kontaktflächen dienen dazu, eventuell auftretende Fluchtungs- oder Winkelfehler auszugleichen, so dass unabhängig von diesen Fehlern eine flächige Krafteinleitung erfolgen kann.

Aus der EP 1 308 265 A1 ist ein mehrlagiges und ebenes Faserverbundbauteil mit einem Gelenkauge bekannt.

Aufgabe der vorliegenden Erfindung ist es, eine Zusammenstellung der eingangs genannten Art zu schaffen, mit dem eine derartige Beschädigung von Fasern eines umlenkend zugbelasteten Faserverbundelementes vermieden ist.

Diese Aufgabe wird durch eine Zusammenstellung eines Faserverbundelements und eines Unterlegelements nach Anspruch 1 gelöst.

Durch die erfindungsgemäßen Maßnahmen ist erreicht, dass auf Grund der Form des Verbindungsbauteils bei flexiblen Faserverbundelementen eine sanfte Umlenkung der Fasern von ihrer senkrecht zur axialen Ausrichtung angeordneten Lage in eine spitzwinklig oder parallel zur axialen Ausrichtung angeordneten Lage erfolgt und dass bei starren entsprechend geformten Faserverbundelementen diese im Faserverbundelement vorgesehene sanfte Umlenkung der Fasern auch bei Nutzung des Verbindungsbauteils aufrecht erhalten bleibt. Mit anderen Worten, auch bei einem axial großen Anzugsmoment auf das Verbindungsbauteil bleiben die Fasern des Faserverbundelementes in ihrer umlenkenden Ausgangslage, ohne dass ein nachteiliger scharfkantiger axialer Druck auf die Fasern ausgeübt werden kann.

Vorteilhaft hierbei ist, dass die Fasern eines derartigen Faserverbundelementes bei Zugbelastung in Richtung senkrecht zur axialen Ausrichtung des Verbindungsbauteils nicht durch scharfkantige Bereiche, wie Außengewindegänge verletzt werden können.

Des Weiteren bezieht sich die vorliegende Erfindung auf eine entsprechende Verwendung der vorgenannten Zusammenstellung nach Anspruch 2 oder nach Anspruch 3.

Weitere Einzelheiten der Erfindung sind der folgenden Beschreibung zu entnehmen, in der die Erfindung anhand der in der Zeichnung dargestellten Ausführungsbeispiele näher beschrieben und erläutert ist. Es zeigen:
- Figur 1: in schematischer und abgebrochener Draufsicht ein flexibles Faserverbundelement in Form eines Bandes, das mit einem Verbindungsbauteil gemäß vorliegender Erfindung kombinierbar ist,
- Figur 2: in schematischer Draufsicht eine schellenförmige Anwendung des flexiblen Faserverbundelementes nach Figur 1 unter endseitiger Verbindung mit Hilfe eines Verbindungsbauteils gemäß vorliegender Erfindung,
- Figuren 3A, 3B und 3C: einen Längsschnitt durch ein Verbindungsbauteil gemäß bevorzugten Ausführungsbeispielen vorliegender Erfindung, wie es nach Figur 2 verwendet ist beziehungsweise werden kann,
- Figur 4: in schematischer perspektivischer und abgebrochener Darstellung ein starres Faserverbundelement beispielsweise in Form eines Rotorflügels zur Verbindung mit einem beispielsweise metallischen Bauelement unter Verwendung des Verbindungsbauteils nach Figur 3A und
- Figur 5: einen Schnitt längs der Linie V-V der Figur 4.

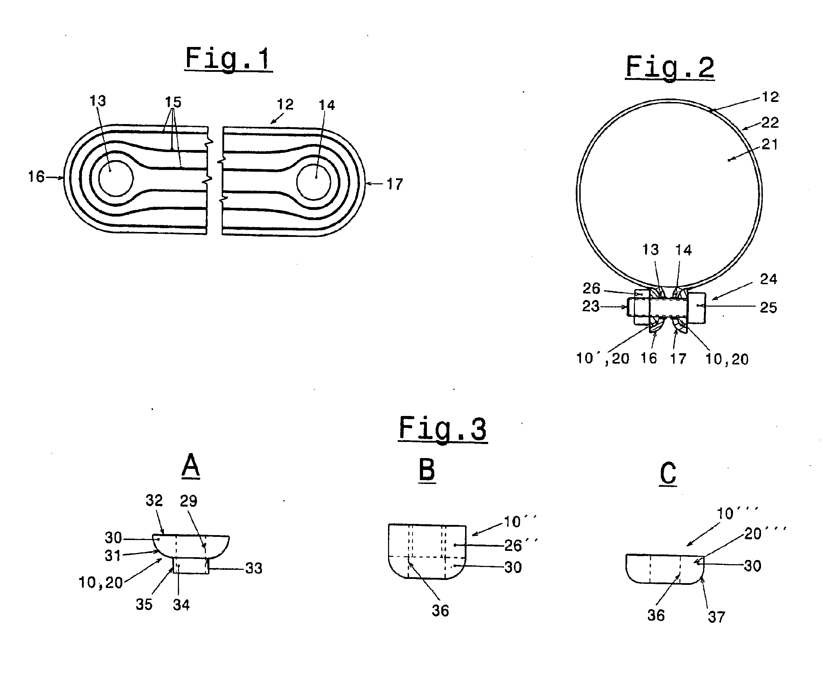

Figur 1 zeigt ein flexibles, hier bandförmiges Faserverbundelement 12, das an seinen beiden Enden mit einer Durchgangsöffnung 13, 14 versehen ist, die die einzelnen Fasern 15 der Lagen des Faserverbundelementes 12 aus einer axialen Richtung kommend und in eine axiale Richtung gehend umschlingen. Es versteht sich, dass einzelne oder alle dieser Fasern 15 die Durchgangsöffnung 13, 14 ein oder mehrmals umschlingen können.

Dieses flexible Faserverbundelement 12 kann beispielsweise als Rohrschelle oder als halbkreisförmige Schelle zur Verbindung eines Bauelementes auf einem anderen Bauelement, wie beispielsweise bei Lagerschalen, Verwendung finden.

Figur 2 zeigt das flexible Faserverbundelement 12 als Rohrschelle 22 um ein Bauteil 21, wobei die beiden mit der Durchgangsöffnung 13 beziehungsweise 14 versehenen Enden 16 und 17 aus ihren Umfangsrichtungen in eine radiale Richtung parallel umgelenkt sind. Die beiden Enden 16 und 17 sind unter Verwendung eines Verbindungsbauteils 10 nach Figur 3A miteinander derart verbunden, dass das flexible Faserverbundelement 12 beziehungsweise die Rohrschelle 22 beziehungsweise deren Fasern 15 in Umfangsrichtung auf Zug beansprucht sind, wobei die zugbelastete Beanspruchung aus der Umfangsrichtung in die radialen hier parallelen Richtungen umgelenkt ist.

Gemäß Figur 2 sind zwei Verbindungsbauteile 10 und 10' vorgesehen gemäß Figur 3A vorgesehen, die die Durchgangsöffnung 13 beziehungsweise 14 durchdringen und die selbst vom Schaft 23 einer Schraube 24 durchdrungen sind, wobei der Kopf 25 der Schraube 24 an dem einen Verbindungsbauteil 10 und eine dem Schraubenkopf 25 abgewandt auf den Gewindeschaft 23 aufgeschraubten Mutter 26 an dem anderen Verbindungsbauteil 10' anliegt.

Die Verbindungsbauteile 10 und 10' sind identisch ausgebildet und dienen als Unterlegelement 20 für die Schrauben-Mutter-Verbindung. Das Unterlegelement 20 gemäß Figur 3A, das eine Schaftbohrung 29 aufweist, besitzt ein Formteil 30, dessen Außenumfang 31 kugelkalottenförmig oder kegelstumpfförmig ausgebildet ist. Mit anderen Worten, das Formteil 30 besitzt an seinen betreffenden Enden eine durchmessergroße Kreisringform und an seinem gegenüberliegenden Ende eine durchmesserkleine Kreisringform. An der durchmessergroßen Stirnfläche 32 liegt gemäß Figur 2 der Schraubenkopf 25 beziehungsweise die Mutter 26 flach an. Gemäß Figur 2 liegt das jeweilige Ende 16, 17 des flexiblen Faserverbundelements 12 mit seinem die Durchgangsöffnung 13 beziehungsweise 14 umgebenden Flächenbereich an dem kugelkalottenförmigen beziehungsweise kegelstumpfförmigen Außenumfang 31 an, mittels dem eine sanfte Umlenkung aus der radialen Richtung in die Umfangsrichtung des Bauteils 21 vorgenommen ist. Die Höhe der Kugelkalotte beziehungsweise des Kegelstumpfes des Formteils 30 hängt von der Dicke des Faserverbundelementes 12 und/oder von dessen Umlenkwinkel ab.

Das Unterlegelement 20 kann aus dem Formteil 30 allein bestehen. Gemäß Figur 3A ist jedoch das Formteil 30 an seiner durchmesserkleinen Stirnfläche 33 mit einer angeformten axialen Hülse 34 versehen, deren zylindrischer Außenumfang 35 glatt ausgebildet ist und dessen axiale Länge gleich oder etwas größer als die Dicke des flexiblen Faserverbundelementes 12 ist. Dadurch gelangt das flexible Faserverbundelement 12 nicht mit scharfkantigen Bereichen des Außengewindes der Schraube 24 in Berührung.

Gemäß dem Ausführungsbeispiel der Figur 3B ist das Verbindungsbauteil 10" dadurch gebildet, dass eine Innengewinde-Mutter 26" mit dem Formteil 30 (mit oder ohne anschließender Hülse 34) einstückig ist, wobei das Formteil eine axiale Durchgangsbohrung 36 aufweist.

Gemäß dem Ausführungsbeispiel der Figur 3C ist das Verbindungsbauteil 10"' dadurch gebildet, dass ein Unterlegelement 20"' als zylindrisches Formteil 30 (mit oder ohne einstückig anschließender Hülse 34) ausgebildet ist, wobei das Formteil 30, das eine axiale Durchgangsbohrung 36 aufweist, an seiner dem Faserverbundelement 11 beziehungsweise 12 zugewandten Endkante 37 gerundet ist.

Des Weiteren kann bei der in Figur 2 dargestellten Verbindung das Unterlegelement 20 nicht nur durch die vorgenannte Mutter 26" sondern auch durch eine entsprechende Gestaltung des Schraubenkopfs 25 ersetzt werden. Mit anderen Worten, eines der Unterlegelemente 20 kann entfallen, wenn der Schraubenkopf 25 an seiner Unterseite mit einem Formteil einstückig versehen ist, das dem Formteil 30 mit seinem kugelkalottenförmigen oder kegelstumpfförmigen Außenumfang 31 entspricht. Um bei solchen Ausführungen eine Berührung des flexiblen Faserverbundelements 12 mit dem Außengewinde der Schraube 24 zu verhindern, kann der Schraubenkopf 25 und/oder die Mutter 26 am durchmesserkleinen Ende seines Formteils 30 mit einer Hülse einstückig verlängert sein beziehungsweise der Schraubenschaft 23 kann im Anschluss an das Formteil an der Unterseite des Schraubenkopfs 25 mit einem außenumfangsseitig glatten Bereich versehen sein.

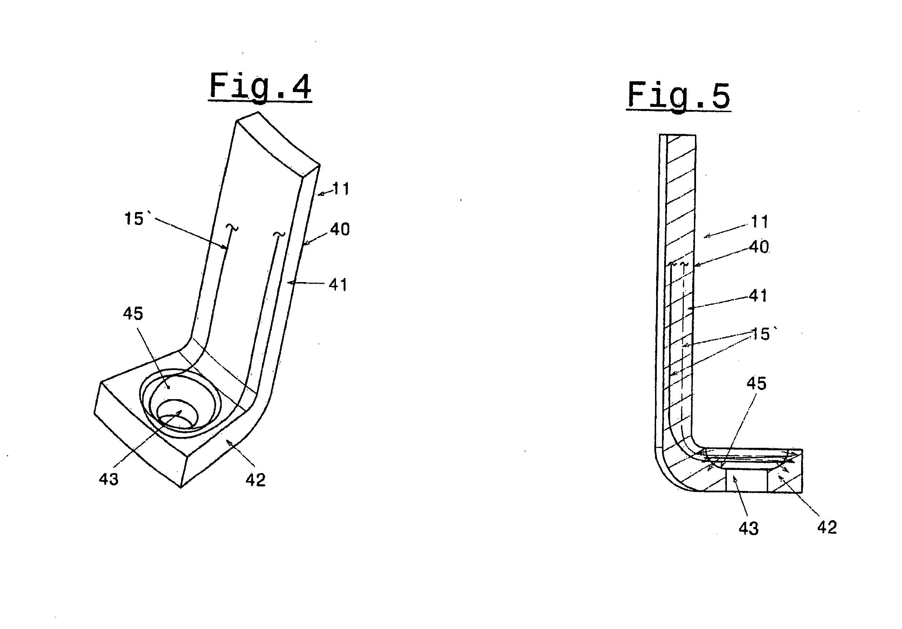

Figur 4 zeigt ein starres Faserverbundelement 11, das beispielsweise ein Rotorflügel 40 eines Windkraftrades sein kann. Dieses starre Faserverbundelement 11 in Form eines Rotorflügels 40 besitzt einen Flügelarm 41, der mit einem einendig vorgesehenen ringförmigen Befestigungsansatz 42 oder mit mehreren umfangsseitig in gleichmäßigem Abstand angeordneten Abschnitten von Befestigungsansätzen 42 versehen ist, wobei der Befestigungsansatz 42 gegenüber dem Flügelarm 41 etwa radial nach außen gerichtet ist. Der oder die Befestigungsansätze 42 und der Flügelarm 41 bilden einen Winkel bis maximal 100°. Der Befestigungsansatz 42, der an einer nicht dargestellten Rotornabe zu befestigen ist, besitzt eine etwa axial gerichtete Durchgangsbohrung 43, deren der Rotornabe abgewandte Zugangsbereich einen kugelkalottenförmigen oder kegelstumpfförmigen Innenumfang 45 aufweist. Die axiale Länge des Innenumfangs 45 ist kleiner als die oder höchstens gleich der axialen Länge der gesamten Durchgangsbohrung 43.

In den kugelkalottenförmigen oder kegelstumförmigen Innenumfang 45 der Durchgangsbohrung 43 passt ein in Figur 3A dargestelltes Unterlegelement 20 in Form seines kugelkalottenförmigen oder kegelstumpfförmigen Formteils 30, durch das eine nicht dargestellte Schraube steckbar und an der gegenüberliegenden Fläche der Rotornabe mit einer entsprechenden Mutter befestigt wird. Es versteht sich, dass der Innenumfang 45 der Durchgangsbohrung 43 auch zylindrisch und einendig gerundet sein kann.

Wie den Figuren 4 und 5 zu entnehmen ist, sind auch bei diesem Ausführungsbeispiel eines starren Faserverbundelements 11 die einzelnen Fasern 15' vom Flügelarm 41 ausgehend zum Befestigungsansatz 42 aus einer axialen Richtung in eine radiale Richtung umgelenkt und umschlingen ein oder mehrmals die mit ihren kugelkalottenförmigen oder kegelstumpfförmigen Innenumfang 45 versehene Durchgangsbohrung 43. Dies bedeutet, dass die umlenkende Zugbelastung auf die Fasern 15' aus der axialen Richtung des Flügelarms 41 in die Umfangsrichtung des Befestigungsansatzes 42 bogenförmig sanft erfolgt und im Innenumfang 45 der Durchgangsbohrung 43 entsprechend den dargestellten Pfeilen ohne scharfen Kante, so dass dort keine Scherkräfte wirken können.

Auch bei diesem Ausführungsbeispiel nach den Figuren 4 und 5 kann das Unterlegelement gemäß Figur 3A als Formteil 30 mit oder ohne zylindrische Hülse 34 ausgebildet und verwendet sein. Es versteht sich, dass erfindungswesentlich nicht nur die Ausformung des Verbindungsbauteils, wie ein Schraubenkopf, ein Nietkopf, eine Mutter, ein Unterlegelement oder dergleichen ist, sondern auch die Kombination dieses Verbindungsbauteils mit der Ausführung eines flexiblen oder starren Faserverbundelementes und der Anordnung von dessen Verstärkungsfasern aus beispielsweise Karbon- oder Glasfaser.

Hieraus ergeben sich verschiedenste Verwendungen dieser aufeinander abgestimmten Kombination von Verbindungsbauteil und Faserverbundelement, wie beispielsweise zur Befestigung von Rotorblättern an der Rotornabe eines Windrades oder von Rotorblätterbauteilen eines Windrades miteinander oder als Befestigungsschelle, Schlauch- oder Rohrschelle.

## Patentansprüche

1. Zusammenstellung eines flexiblen oder starren Faserverbundelements (12, 11) und eines Unterlegelements (20), welches Faserverbundelement (12, 11) zur Befestigung mit einem Bauelement mittels des Unterlegelements (20) dient, wobei das Faserverbundelement (12, 11) an mindestens einem Endbereich eine Durchgangsöffnung (13, 14; 43) aufweist, welcher Endbereich bzw. welche Endbereiche in Befestigungsposition gegenüber dem angrenzenden Hauptteil um maximal 100° umgelenkt ist bzw. sind, wobei die Fasern (15) des Faserverbundelementes (12, 11) etwa tangential auf die Durchgangsöffnung (13, 14; 43) zulaufen und diese mindestens einmal umschlingen, wobei die Durchgangsöffnung (43) an ihrem mindestens einen Endbereich einen kugelkalottenförmigen oder kegelstumpfförmigen oder zylindrischen mit einendig gerundeter Kante (37) versehenen Innenumfang (45) aufweist, wobei das Unterlegelement (20) dem Faserverbundelement (12, 11) zugewandt einen kugelkalottenförmigen oder kegelstumpfförmigen Außenumfang (31) aufweist und das Unterlegelement (20) am durchmesserkleinen Ende seines Außenumfangs mit einer angeformten Hülse (34), die einen glatten Außenumfang besitzt, versehen ist.

2. Verwendung der Zusammenstellung nach Anspruch 1 zur Befestigung von Rotorblättern an der Rotornabe eines Windrades oder von Rotorblätterbauteilen eines Windrades miteinander.

3. Verwendung der Zusammenstellung nach Anspruch 1 als Befestigungsschelle, Schlauch- oder Rohrschelle.

## Claims

1. Combination of a rigid or flexible composite fibre-reinforced member (12, 11) and a washer member (20), which composite fibre-reinforced member (12, 11) is used, by means of the washer member (20), to make a fastening to a structural member, the composite fibre-reinforced member (12, 11) having a through-opening (13, 14; 43) in at least one end-region, which end-region or end-regions is or are diverted through a maximum of 100° from the adjoining main body in the fastening position, the fibres (15) of the composite fibre-reinforced member (12, 11) arriving at the through-opening (13, 14; 43) approximately tangentially and looping therearound at least once, the through-opening (43) having, in at least one of its end-regions, an inner circumference (45) in the form of a segment of a sphere or a truncated cone or a cylinder which is provided with an edge (37) radiused at one end, the washer member (20) having, adjacent the composite fibre-reinforced member (12, 11), an outer circumference (31) in the form of a segment of a sphere or a truncated cone and the washer member (20) being provided at the small-diameter end of its outer circumference with an integrally formed sleeve (34) which has a smooth outer circumference.

2. Use of the combination according to claim 1 to fasten rotor blades to the rotor hub of a wind turbine or components of rotor blades of a wind turbine to one another.

3. Use of the combination according to claim 1 as a fastening clip, hose clip or pipe clip.

## Revendications

1. Assemblage d'un élément renforcé par fibres (12, 11) flexible ou rigide et d'un élément de calage (20), lequel élément renforcé par fibres (12, 11) est destiné à être fixé à une pièce au moyen de l'élément de calage (20), ledit élément renforcé par fibres (12, 11) comportant un orifice de passage (13, 14; 43) dans au moins une zone d'extrémité, laquelle zone d'extrémité ou lesquelles zones d'extrémité, dans la position de fixation, est/sont déviées de 100° maximum par rapport à la pièce principale adjacente, les fibres (15) de l'élément renforcé par fibres (12, 11) convergeant à peu près tangentiellement vers l'orifice de passage (13, 14; 43) et entourant celui-ci au moins une fois, ledit orifice de passage (43) comportant au niveau de ladite au moins une zone d'extrémité un contour intérieur (45) en forme de calotte sphérique ou en forme de cône tronqué ou cylindrique avec une arête (37) arrondie au niveau de l'extrémité, ledit élément de calage (20) comportant un contour extérieur (31) en forme de calotte sphérique ou en forme de cône tronqué, orienté vers l'élément renforcé par fibres (12, 11), et ledit élément de calage (20), au niveau de son extrémité à petit diamètre de son pourtour extérieur, étant muni d'une douille (34) formée contre ce dernier et possédant un pourtour extérieur lisse.

2. Utilisation de l'assemblage selon la revendication 1 pour la fixation des pales d'un rotor sur un moyeu du rotor d'une éolienne ou la fixation des pièces des pales d'un rotor d'éolienne les unes aux autres.

3. Utilisation de l'assemblage selon la revendication 1 sous la forme d'un collier de fixation, d'un collier de serrage pour tuyaux flexibles ou d'un collier d'attache pour tubes.
